## Europäisches Patentamt

## European Patent Office

## Office européen des brevets

(19)

(11) Veröffentlichungsnummer: **0 109 017**
**B1**

(12) **EUROPÄISCHE PATENTSCHRIFT**

(45) Veröffentlichungstag der Patentschrift:
**11.03.87**

(51) Int. Cl.⁴: **G 06 F 15/20**

(21) Anmeldenummer: **83111040.8**

(22) Anmeldetag: **04.11.83**

(54) **Anordnung zum Löschen von Texten.**

(30) Priorität: **08.11.82 DE 3241170**

(43) Veröffentlichungstag der Anmeldung:
**23.05.84 Patentblatt 84/21**

(45) Bekanntmachung des Hinweises auf die Patenterteilung:
**11.03.87 Patentblatt 87/11**

(84) Benannte Vertragsstaaten:
**CH DE FR GB IT LI SE**

(56) Entgegenhaltungen:
**GB - A - 1 533 499**

**IBM TECHNICAL DISCLOSURE BULLETIN, Band 24, Nr. 10, März 1982, Seiten 4996-5000, New York, US; T.L. ADAM et al.: "Block operations for text revision"**
**IBM TECHNICAL DISCLOSURE BULLETIN, Band 23, Nr. 3, August 1980, Seiten 1107-1108, New York, US; R.F. HANFT et al.: "Multiple character erase"**

(73) Patentinhaber: **Siemens Aktiengesellschaft Berlin und München, Wittelsbacherplatz 2, D-8000 München 2 (DE)**

(72) Erfinder: **Müller, Wolfgang, Dipl.-Ing., Makartstrasse 21, D-8000 München 71 (DE)**

**Beschreibung**

Die Erfindung bezieht sich auf eine Anordnung zum Löschen von Texten entsprechend dem Oberbegriff des Patentanspruchs 1.

Es ist bereits allgemein bekannt, bei einer Bearbeitung oder Verarbeitung von in einer Textstation, beispielsweise einer Fernschreibmaschine gespeicherten Texten diese mindestens teilweise zu löschen. Die Texte werden zu diesem Zweck an einer Ausgabeeinheit dargestellt. Diese Ausgabeeinheit kann entweder ein Bildschirm eines Sichtgeräts, eine ein- oder mehrzeilige Anzeigeeinheit oder ein Druckwerk sein. Bei der Darstellung am Sichtgerät oder an der Anzeigeeinheit erfolgt das Löschen durch Tilgen der entsprechenden Zeichen und bei einer Darstellung mit Hilfe des Druckwerks werden die Zeichen mit einem besonderen Zeichen, beispielsweise dem Buchstaben «X» überschrieben.

Das Löschen der Zeichen erfolgt üblicherweise unter Verwendung einer oder mehrerer Löschtasten. Falls nur eine Löschtaste vorgesehen ist, wird häufig nach einem kurzen Betätigen dieser Löschtaste jeweils ein Zeichen des Textes gelöscht. Bei einer Dauerbetätigung werden selbsttätig mehrere aufeinanderfolgende Zeichen gelöscht, deren Anzahl der Dauer der Betätigung der Löschtaste entspricht. Auf diese Weise können mittels der Löschtaste nicht nur Zeichen, sondern Wörter, Zeilen, Absätze oder ganze Seiten gelöscht werden.

Es ist auch möglich, mehrere Löschtasten vorzusehen, beispielsweise zusätzlich zu der Löschtaste «Löschen Zeichen» weitere Löschtasten «Löschen Wort», «Löschen Zeile» oder «Löschen Seite» vorzusehen. Nach der Betätigung der entsprechenden Löschtaste werden dann entweder eine oder mehrere Zeichen, Wörter, Zeilen oder Seiten gelöscht.

Falls nur eine einzige Taste «Löschen Zeichen» vorgesehen ist, und beispielsweise ein Wort gelöscht werden soll, ist es bei einer Dauerbetätigung dieser Taste häufig nicht möglich, die Wortgrenze genau zu erfassen, so dass im allgemeinen kurz vor der Wortgrenze die Dauerbetätigung der Löschtaste beendet werden muss und sich der Bediener durch Einzelbetätigungen der Löschtaste an die Wortgrenze herantasten muss. Falls die Dauerbetätigung zu spät beendet wird, kann der Fall eintreten, dass das nächstfolgende Wort versehentlich zumindest teilweise gelöscht wird. Bei der Verwendung einer Mehrzahl von Löschtasten kann dieser Fall nicht eintreten, da dann beispielsweise bei dem Löschen eines Wortes nach dem Betätigen der Taste «Löschen Wort» selbsttätig nur das entsprechende Wort gelöscht wird. Die Verwendung mehrerer Löschtasten erfordert jedoch einen erheblichen Aufwand. Ausserdem besteht die Gefahr, dass die Akzeptanz der Textstation durch ungeschulte Bediener vermindert wird, wenn an der Tastatur sehr viele Steuertasten vorgesehen sind.

Der Erfindung liegt daher die Aufgabe zugrunde, eine Anordnung zum Löschen von Texten anzugeben, bei der zusätzlich zu einer Löschtaste «Löschen Zeichen» keine weitere Löschtaste erforderlich ist, um in den Texten einzelne Wörter zu löschen.

Erfindungsgemäss wird die Aufgabe bei der Anordnung der eingangs genannten Art durch die im kennzeichnenden Teil des Patentanspruchs 1 angegebenen Merkmale gelöst.

Die Anordnung gemäss der Erfindung hat den Vorteil, dass sie einen geringen Aufwand erfordert, da an der Tastatur keine zusätzlichen Tasten erforderlich sind und dass dennoch die Funktion eines wortweisen Löschens durchführbar ist. Weiterhin hat die Anordnung den Vorteil, dass unter Verwendung einer einzigen Löschtaste sowohl ein zeichenweises einzelnes Löschen von Zeichen und ein kontinuierliches Löschen von Zeichen als auch ein wortweises Löschen möglich ist. Falls bei der üblichen Verwendung einer Löschtaste «Löschen Wort» diese Löschtaste versehentlich auch nur kurzzeitig betätigt wird, wird in jedem Fall das vollständige Wort gelöscht. Bei der Anordnung gemäss der Erfindung wird im Gegensatz hierzu das Löschen sofort beendet, sobald die Löschtaste losgelassen wird. Falls nach dem Löschen eines Worts die Löschtaste weiterhin betätigt wird, wird man einer kurzen Verweilzeit selbsttätig das nächstfolgende Wort gelöscht.

Das Erkennen der Wortgrenzen erfolgt auf einfache Weise dadurch, dass der Löschvorgang beendet wird, wenn ein Zeichen «Zwischenraum» erkannt wird. Insbesondere erweist es sich als zweckmässig, den Löschvorgang zu beenden, wenn die Aufeinanderfolge eines Zeichens «Zwischenraum» und eines abdruckbaren Zeichens erkannt wird.

Der Löschvorgang kann entgegengesetzt der Schreibrichtung oder in Schreibrichtung erfolgen. Beim Löschen von an einem Sichtgerät oder einer Anzeigeeinheit dargestellten Texten kann dabei eine die jeweilige Schreibstelle anzeigende Schreibmarke entsprechend dem Löschvorgang mitwandern oder die zu löschenden Texte wandern in Richtung auf eine feststehende Schreibmarke. Falls der Löschvorgang entgegengesetzt der Schreibrichtung erfolgt, ist es günstig, wenn die restlichen Zeichen mindestens der gleichen Zeile selbsttätig nachgezogen werden.

Falls eine Mehrzahl von Zeichen «Zwischenraum» innerhalb des zu löschenden Textes auftritt, ist es vorteilhaft, wenn diese in gleicher Weise wie Texte behandelt werden und nach einem erneuten Betätigen der Löschtaste soweit gelöscht werden, dass noch ein Zeichen «Zwischenraum» vor dem nächstfolgenden Text mit abdruckbaren Zeichen übrigbleibt.

Im folgenden wird ein Ausführungsbeispiel der Schaltungsanordnung anhand von Zeichnungen näher erläutert. Es zeigen:

Fig. 1 eine Darstellung eines teilweise zu löschenden Textes bei einem mehrfachen Löschvorgang in einer Richtung entgegengesetzt der Schreibrichtung.

Fig. 2 eine Darstellung eines teilweise zu löschenden Textes bei einem mehrfachen Löschvorgang in Schreibrichtung.

Fig. 3 eine Darstellung des Textes nach dem Löschvorgang.

Fig. 4 ein Blockschaltbild der Anordnung.

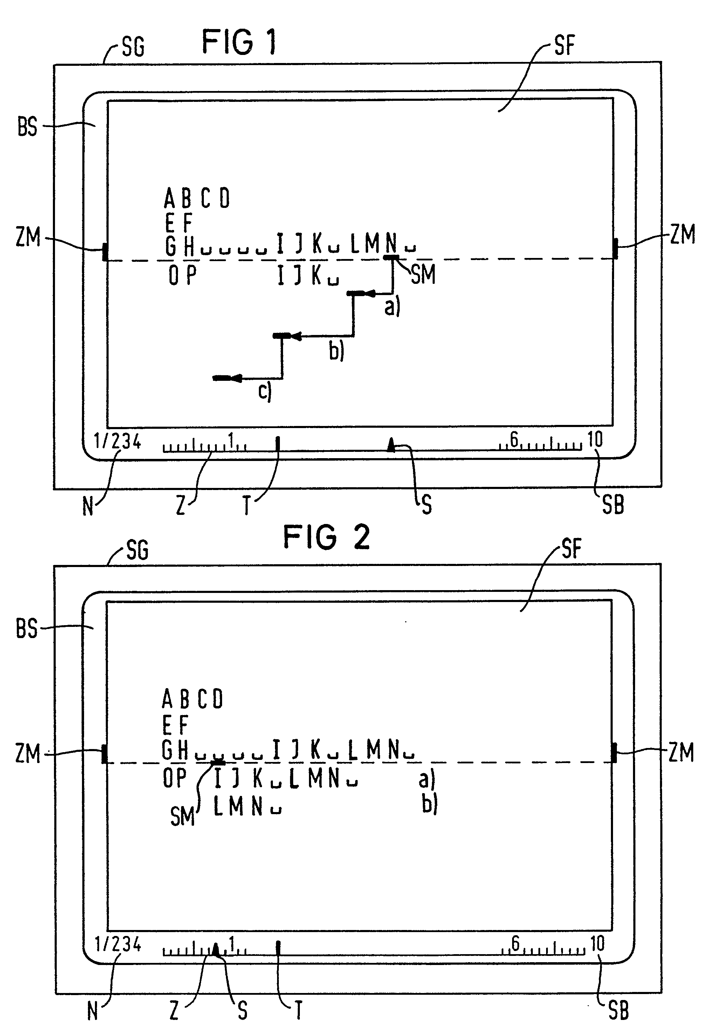

Das in Fig. 1 dargestellte Sichtgerät SG, das Bestandteil einer Fernschreibmaschine oder einer anderen Textstation ist, enthält einen Bildschirm BS, auf dessen Schreibfeld SF ein gespeicherter Text dargestellt ist. Der Text wird aus den Buchstaben A bis P gebildet. Der Text stellt eine Nachricht dar, die beispielsweise von der Fernschreibmaschine zu einem fernen Teilnehmer übertragen werden soll. Die Nachricht ist in einem Nachrichtenspeicher der Fernschreibmaschine gespeichert. Die Nachrichtennummer N wird in einem vorgegebenen Anzeigebereich auf dem Bildschirm BS dargestellt. Zusätzlich wird dort ein Zeilenlineal Z dargestellt, auf dem Tabulatormarken T und eine Schreibstellenanzeige S darstellbar sind. Die Schreibstellenanzeige S wird gleichzeitig mit einer Schreibmarke SM in horizontaler Richtung bewegt. Diese Schreibmarke SM kennzeichnet jeweils die Stellen, an der ein Zeichen im Schreibfeld SF änderbar ist. Die Schreibmarke SM bewegt sich jeweils in einer Schreibzeile, die durch zwei Zeilenmarken ZM zu beiden Seiten des Schreibfelds SF gekennzeichnet ist. In dem vorgegebenen Anzeigebereich wird zusätzlich ein noch freier Speicherbereich SB dargestellt, um dem Bediener noch die Anzahl der zu beschreibenden Seiten auf einem peripheren Speicher anzuzeigen.

Es wird angenommen, dass unter Verwendung einer Löschtaste der in der Schreibzeile den Buchstaben GH folgende Text gelöscht werden soll. Das Löschen erfolgt entgegengesetzt der Schreibrichtung und die Schreibmarke S wird zunächst zum Buchstaben N, an das Ende des aus dem Buchstaben L bis N gebildeten Worts positioniert. Die Buchstaben können durch jeweils kurzes Betätigen einer Löschtaste zeichenweise gelöscht werden. Bei einer Dauerbetätigung der Löschtaste erfolgt ein kontinuierliches Löschen der Buchstaben und wenn die Wortgrenze durch das Zeichen «Zwischenraum» erkannt wird, wird der Löschvorgang zunächst beendet und die Schreibmarke SM bleibt, entsprechend der schematischen Darstellung bei a an der bisherigen Position des Buchstabens L stehen. Bei einer Dauerbetätigung der Löschtaste wird nach einer kurzen Verweilzeit von beispielsweise 300 ms der Löschvorgang fortgesetzt und in entsprechender Weise wird das nachfolgende aus den Buchstaben I bis K gebildete Wort gelöscht. Wiederum wird der Löschvorgang beim Erkennen des Zeichens «Zwischenraum» an der Wortgrenze beendet, was schematisch durch b dargestellt ist. Bei einem erneuten Betätigen der Löschtaste oder bei einer weiteren Dauerbetätigung wird der Löschvorgang erneut in Gang gesetzt und die nachfolgenden Zeichen «Zwischenraum» werden soweit gelöscht, dass nur das an den Buchstaben H angrenzende Zeichen «Zwischenraum» weiterhin bestehen bleibt, wie es bei c dargestellt ist. Nun wird das Betätigen der Löschtaste beendet, da der gewünschte Löschvorgang vollständig durchgeführt wurde.

Der Löschvorgang kann innerhalb jedes Worts jederzeit unterbrochen werden. In diesem Fall geht das wortweise Löschen des Textes sofort in ein zeichenweises Löschen über, so dass auch Teile von Wörtern auf einfache Weise gelöscht werden können.

Bei der in Fig. 2 gezeigten Darstellung des Textes erfolgt das Löschen in Schreibrichtung. Die Schreibmarke SM wird in diesem Fall während des Löschvorgangs nicht bewegt und bleibt an derjenigen Stelle stehen, die den Anfang des Bereichs angibt, der gelöscht werden soll. Nach einem ersten Dauerbetätigen der Löschtaste wird der Löschvorgang beendet, wenn die Grenze des nachfolgenden Wortes erkannt wird. In diesem Fall steht der Buchstabe I, wie bei a schematisch dargestellt, an der durch die Schreibmarke SM gekennzeichneten Stelle. Bei einem erneuten Betätigen der Löschtaste oder einem Dauerbetätigen wird anschliessend das aus den Buchstaben I bis K und einem Zeichen «Zwischenraum» gebildete Wort gelöscht und der Buchstabe L des nachfolgenden Worts steht nun, wie bei b dargestellt an der durch die Schreibmarke SM gekennzeichneten Stelle. Nach einer weiteren Betätigung der Löschtaste wird auch das nachfolgende Wort und das zugehörige Zeichen «Zwischenraum» gelöscht.

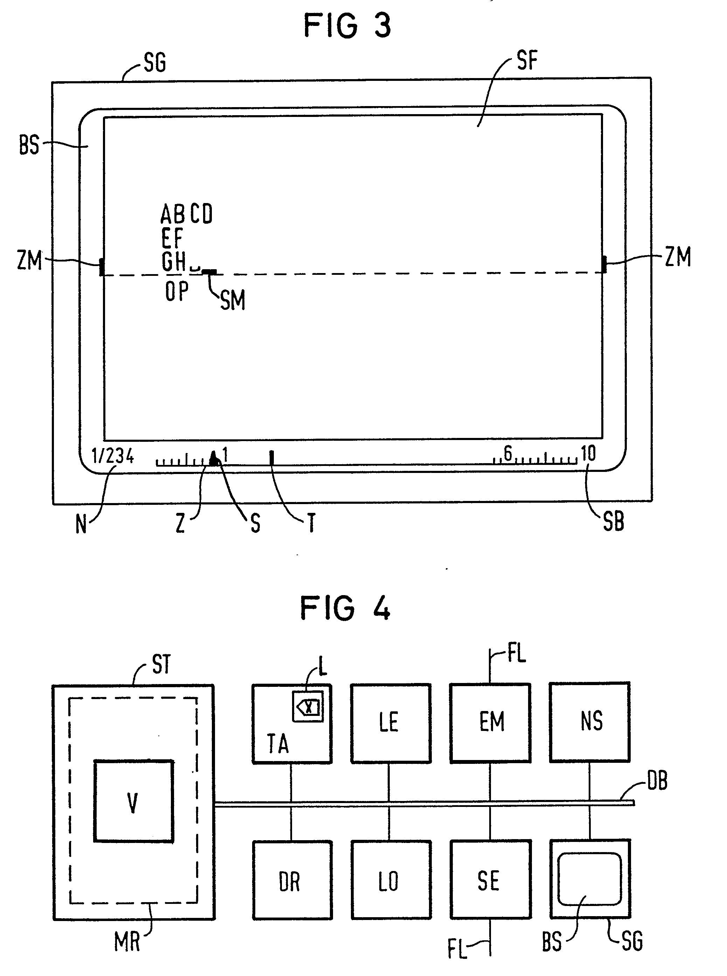

Bei der Darstellung in Fig. 3 ist der Text gezeigt, wie er nach dem in den Fig. 1 und 2 dargestellten Löschvorgang am Bildschirm BS dargestellt wird. Die Schreibmarke SM befindet sich in jedem Fall nach dem auf den Buchstaben H folgenden Zeichen «Zwischenraum», so dass sofort mit der Eingabe eines neuen Worts begonnen werden kann.

Die Schreibmarke SM kann auch in anderer Weise dargestellt werden. Insbesondere erweist es sich als zweckmässig, die Schreibmarke durch ein schwarzes Rechteck darzustellen, das einen Zeichenplatz einnimmt und bei dem ein jeweils an dieser Stelle stehendes Zeichen invers dargestellt wird.

Falls anstelle des Sichtgeräts SG eine ein- oder mehrzeilige Anzeigeeinheit verwendet wird, laufen die Löschvorgänge entsprechend ab. Bei einer Darstellung des Textes auf einem Aufzeichnungsträger, beispielsweise unter Verwendung eines Druckwerks erfolgt das Löschen der Zeichen entsprechend dem in Fig. 1 dargestellten Vorgang entgegengesetzt der Schreibrichtung oder in Schreibrichtung durch Überschreiben der entsprechenden Zeichen durch ein besonderes Zeichen, beispielsweise den Buchstaben «X». Anschliessend kann durch ein Verschieben des Aufzeichnungsträgers ein neuer Text unmittelbar oberhalb oder unterhalb des gelöschten Textes geschrieben werden.

Bei der in Fig. 4 als Blockschaltbild dargestellten Fernschreibmaschine oder Textstation sind an einem Datenbus DB als Eingabeeinheiten eine Tastatur TA, ein Lochstreifenleser LE und ein an einer Fernleitung FL angeschlossener Empfänger EM vorgesehen. Als Ausgabeeinheiten sind ein Lochstreifenlocher LO, ein Drucker DR, das Sichtgerät SG und ein an der Fernleitung FL ebenfalls angeschlossener Sender SE vorgesehen. Weiterhin sind an dem Datenbus DB ein Nachrichtenspeicher NS und eine Steuereinheit ST angeschlossen. Der Nachrichtenspeicher NS ist als Halbleiterspeicher, Magnetblasenspeicher oder als Floppydiskspeicher ausgebildet. Die Steuereinheit ST steuert den zeitlichen Ablauf von Funktionen der Fernschreibmaschine und enthält zweckmässigerweise einen mit einem Programmspeicher versehenen Mikrorechner MR. Zusätzlich zu den bekannten Funktionen steuert der Mikrorechner MR auch den Löschvorgang. Wenn an der Tastatur TA die Löschtaste L betätigt wird, erfolgt in an sich bekannter Weise ein zeichenweises einzelnes oder kontinuierliches Löschen der entsprechenden Textteile. Falls der Mikrorechner MR jedoch eine Textgrenze erkennt, wird der Löschvorgang bei der Anordnung beendet und erst wieder nach der Verweilzeit von 300 ms fortgesetzt. Im Mikrorechner MR ist zu diesem Zweck schematisch ein Vergleicher V dargestellt, der den dargestellten Text auf das Vorhandensein eines Zeichens «Zwischenraum» überprüft und beim Erkennen eines einzelnen Zeichens den Löschvorgang beendet. Der Vergleicher V kann auch derart ausgebildet sein, dass er den Löschvorgang nur dann beendet, wenn auf ein Zeichen «Zwischenraum» ein abdruckbares Zeichen folgt, so dass auch eine Mehrzahl von Zeichen «Zwischenraum» entsprechend einem Wort behandelt wird und wortweise gelöscht wird.

### Patentansprüche

1. Anordnung zum Löschen von Texten, die an einer Ausgabeeinheit einer Textstation dargestellt sind, wobei eine Löschtaste vorgesehen ist, mittels der nach jedem einzelnen Betätigen ein Zeichen gelöscht wird und bei einer Dauerbetätigung selbsttätig eine Mehrzahl von Zeichen gelöscht wird, dadurch gekennzeichnet, dass eine Steuereinheit (ST) vorgesehen ist, die bei Dauerbetätigung der Löschtaste (L) beim Erkennen einer Grenze eines Wortes des Textes selbsttätig den Löschvorgang beendet.

2. Anordnung nach Anspruch 1, dadurch gekennzeichnet, dass die Steuereinheit (ST) den Löschvorgang beendet, wenn sie ein Zeichen «Zwischenraum» unter den zu löschenden Zeichen erkennt.

3. Anordnung nach Anspruch 1 oder Anspruch 2, dadurch gekennzeichnet, dass die Steuereinheit (ST) ein Löschen entgegengesetzt der Schreibrichtung steuert und eine die jeweilige Schreibstelle anzeigende Schreibmarke (SM) entsprechend dem Löschvorgang verschoben wird.

4. Anordnung nach Anspruch 3, dadurch gekennzeichnet, dass die Schreibmarke (SM) nach dem Löschen eines Worts entgegengesetzt der Schreibrichtung vor dem Zeichen «Zwischenraum» stehenbleibt.

5. Anordnung nach Anspruch 3, dadurch gekennzeichnet, dass die Schreibmarke (SM) auf dem ersten Zeichen «Zwischenraum» nach einem gelöschten Wort stehenbleibt.

6. Anordnung nach einem der Ansprüche 3 bis 5, dadurch gekennzeichnet, dass die Steuereinheit (ST) eine Verschiebung der nachfolgenden Zeichen entsprechend dem Löschvorgang steuert.

7. Anordnung nach Anspruch 1 oder Anspruch 2, dadurch gekennzeichnet, dass eine die jeweilige Schreibstelle anzeigende Schreibmarke (SM) ihre Position nicht verändert und dass die zu löschenden Zeichen in Richtung der Schreibmarke (SM) verschoben werden.

8. Anordnung nach einem der Ansprüche 1 bis 7, dadurch gekennzeichnet, dass die Steuereinheit (ST) nur dann den Löschvorgang beendet, wenn auf ein Zeichen «Zwischenraum» ein abdruckbares Zeichen folgt.

### Claims

1. An arrangement for erasing texts which are displayed on an output unit of a text station, where an erasing key is provided which, following each individual operation, erases one character and which, in the event of continuous operation automatically erases a plurality of characters, characterised in that a control unit (ST) is provided which, in the event of the continuous operation of the erasing key (L), on recognising a word boundary in the text, automatically terminates the erasing process.

2. An arrangement as claimed in claim 1, characterised in that the control unit (ST) terminates the erasing process when it recognises an «interspace» character amongst the characters which are to be erased.

3. An arrangement as claimed in claim 1 or claim 2, characterised in that the control unit (ST) controls the erasure in a direction opposite to the printing direction and a cursor (SM) which indicates the relevant printing position is displaced in accordance with the erasing process.

4. An arrangement as claimed in claim 3, characterised in that following the erasure of a word in a direction opposite to the printing direction, the cursor (SM) remains in front of the «interspace» character.

5. An arrangement as claimed in claim 3, characterised in that the cursor (SM) remains at the first «interspace» character following an erased word.

6. An arrangement as claimed in one of the claims 3 to 5, characterised in that the control unit (ST) controls a displacement of the following characters in accordance with the erasing process.

7. An arrangement as claimed in claim 1 or claim 2, characterised in that a cursor (SM) which indicates the relevant printing position does not change its position and that the characters to be erased are displaced in the direction of the cursor (SM).

8. An arrangement as claimed in one of the claims 1 to 7, characterised in that the control unit (ST) terminates the erasing process only when an «interspace» character is followed by a printable character.

## Revendications

1. Dispositif pour effacer des textes, qui sont représentés sur une unité de sortie d'un poste de traitement de textes et dans lequel il est prévu une touche d'effacement à l'aide de laquelle un caractère est effacé après chaque actionnement individuel et une multiplicité de caractères sont effacés automatiquement dans le cas d'un actionnement permanent, caractérisé par le fait qu'il est prévu une unité de commande (ST) qui, dans le cas de l'actionnement permanent de la touche d'effacement (L), arrête automatiquement le processus d'effacement lors de l'identification d'une limite d'un mot du texte.

2. Dispositif selon la revendication 1, caractérisé en ce que l'unité de commande (ST) arrête le processus d'effacement lorsqu'elle identifie un caractère «espace» au-dessous du caractère devant être effacé.

3. Dispositif selon la revendication 1 ou 2, caractérisé en ce que l'unité de commande (ST) commande un effacement, dans le sens opposé à la direction d'enregistrement, et un repère d'enregistrement, qui indique la position respective d'enregistrement, est décalé conformément au processus d'effacement.

4. Dispositif suivant la revendication 3, caractérisé par le fait que le repère d'enregistrement (SM) reste en avant du caractère «espace», après l'effacement d'un mot en sens opposé de la direction d'enregistrement.

5. Dispositif suivant la revendication 3, caractérisé par le fait que le repère d'enregistrement (SM) sur le premier caractère «espace» en arrière d'un mot effacé.

6. Dispositif suivant l'une des revendications 3 à 5, caractérisé par le fait que l'unité de commande (ST) commande un décalage du caractère suivant, conformément au processus d'effacement.

7. Dispositif suivant la revendication 1 ou 2, caractérisé par le fait qu'un repère d'enregistrement (SM), qui indique la position respective d'enregistrement, n'est pas modifié, et que les caractères devant être effacés sont décalés en direction du repère d'enregistrement (SM).

8. Dispositif suivant l'une des revendications 1 à 7, caractérisé par le fait que l'unité de commande (ST) n'arrête le processus d'effacement que lorsqu'un caractère devant être imprimé succède à un caractère «espace».

# FIG 1

SG

SF

BS

ZM

ZM

```
A B C D
E F
G H ⎵ ⎵ ⎵ ⎵ ⎵   I J K ⎵ L M N ⎵
O P         I J K ⎵        SM
```

a)

b)

c)

1/234   1   6   10

N   Z   T   S   SB

# FIG 2

SG

SF

BS

ZM

ZM

```
A B C D
E F
G H ⎵ ⎵ ⎵ ⎵ ⎵  I J K ⎵ L M N ⎵
O P ⎵ I J K ⎵ L M N ⎵        a)
SM  L M N ⎵        b)
```

1/234   1   6   10

N   Z   S   T   SB

# FIG 3

# FIG 4